# EUROPEAN PATENT APPLICATION

(11) **EP 4 823 069 A1**
(43) Date of publication of application: **14.10.2026**
(21) Application number: 24899559.9
(22) Date of filing: 08.11.2024
(51) Int. Cl.: H04L 65/80

(54) **COMMUNICATION METHOD, APPARATUS AND SYSTEM**

(30) Priority: 06.12.2023 CN 202311665820
(71) Applicant: Huawei Technologies Co., Ltd., Shenzhen, Guangdong 518129 (CN)
(72) Inventor: LI, Mu, Shenzhen, Guangdong 518129 (CN); HU, Xiaokun, Shenzhen, Guangdong 518129 (CN); ZUO, Jun, Shenzhen, Guangdong 518129 (CN); JI, Mengdi, Shenzhen, Guangdong 518129 (CN)
(74) Representative: Huawei European IPR
(86) International application number: PCT/CN2024/131062
(87) International publication number: WO 2025/118917

(57) **Abstract**

This application relates to the field of communication technologies, and discloses a communication method, apparatus, and system. The method includes: A data channel control network element receives request information from a first communication device, where the request information is for requesting to obtain a data channel application or requesting to use the data channel application; and rejecting the request corresponding to the request information or accepting the request corresponding to the request information based on a traffic type of the data channel application and a data on/off state of the first communication device, where the traffic type is a PS data off exempt type or a non-PS-data-off-exempt type, and the data on/off state is on or off. In this way, the data channel control network element manages and controls obtaining or use of the data channel application based on the traffic type of the data channel application and the data on/off state of the first communication device, to avoid a waste of bandwidth resources of an operator network caused by accepting request information of a data channel application of the non-PS-data-off-exempt type when the data on/off state of the first communication device is off.

## Description

### CROSS-REFERENCE TO RELATED APPLICATIONS

This application claims priority to Chinese Patent Application No. 202311665820.8, filed with the China National Intellectual Property Administration on December 6, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

The 3rd generation partnership project (3rd generation partnership project, 3GPP) defines an IMS data channel (data channel, DC) based on an internet protocol (internet protocol, IP) multimedia subsystem (IP multimedia subsystem, IMS) audio and video communication architecture, that is, one or more data channels parallel to an audio channel and a video channel are established in an IMS communication session, to transmit data of a DC application (which may be any type of data, such as text or images), so that real-time interaction, screen sharing, superimposed augmented reality (augmented reality, AR), and even synchronous full immersive experience of auditory, visual, tactile, and the like can be implemented in an IMS communication session process (for example, an audio/video call process).

According to commercial requirements, different DC applications may have different traffic types. For example, traffic types of some DC applications may be configured as a PS data off exempt type, and traffic types of some DC applications may be configured as a non-PS-data-off-exempt type. Therefore, how to manage and control obtaining or use of the DC applications still needs to be further studied.

### SUMMARY

This application provides a communication method, apparatus, and system, to manage and control, by a data channel control network element based on a traffic type of a data channel application and a data on/off state of a communication device, obtaining or use of the data channel application.

According to a **first aspect**, an embodiment of this application provides a communication method (or an information transfer method). The method may be applied to a data channel control network element or a component (for example, a circuit or a chip) in the data channel control network element. For example, the method is applied to the data channel control network element. In the method, the data channel control network element receives request information from a first communication device, where the request information is for requesting to obtain a data channel application or requesting to use the data channel application; and rejects the request corresponding to the request information or accepts the request corresponding to the request information based on a traffic type of the data channel application and a data on/off state of the first communication device, where the traffic type is a PS data off exempt type or a non-PS-data-off-exempt type, and the data on/off state is on or off.

In this way, the data channel control network element manages and controls obtaining or use of the data channel application based on the traffic type of the data channel application and the data on/off state of the first communication device, to avoid a waste of bandwidth resources of an operator network caused by accepting request information of a data channel application of the non-PS-data-off-exempt type when the data on/off state of the first communication device is off.

In a possible design, rejecting the request corresponding to the request information based on the traffic type of the data channel application and the data on/off state of the first communication device includes: determining that the traffic type is the non-PS-data-off-exempt type and the data on/off state is off; and sending first response information, where the first response information indicates that the request corresponding to the request information is rejected.

In a possible design, accepting the request corresponding to the request information based on the traffic type of the data channel application and the data on/off state of the first communication device includes: determining that the traffic type is the PS data off exempt type and the data on/off state is off; and sending second response information, where the second response information indicates that the request corresponding to the request information is accepted.

In a possible design, the first response information includes reason information, and the reason information indicates that a reason for the rejection is that the traffic type of the data channel application is the non-PS-data-off-exempt type.

In a possible design, the reason information indicates that the reason for the rejection is that the traffic type of the data channel application is inconsistent with the data on/off state of the first communication device.

In this way, the first communication device learns of the reason for the rejection by sending the reason information.

In a possible design, the request information is for requesting to obtain the data channel application, and the second response information includes an installation package of the data channel application; or the request information is for requesting to use the data channel application, and the second response information includes media resource information for establishing an application data channel corresponding to the data channel application.

In a possible design, the method further includes: receiving state information from an internet protocol multimedia subsystem IMS application server, where the state information indicates the data on/off state.

In a possible design, receiving the state information from the IMS application server includes: receiving a session event reporting message from the IMS application server, where the session event reporting message includes the state information.

In a possible design, the state information includes a packet switched data off tag.

In a possible design, the method further includes: obtaining a PS data off exempt application whitelist, where the PS data off exempt application whitelist includes a plurality of application identifiers, and each application identifier identifies a data channel application identified by a network side as the PS data off exempt type; and determining, based on the PS data off exempt application whitelist including an identifier of the data channel application, that the traffic type of the data channel application is the PS data off exempt type; or determining, based on the PS data off exempt application whitelist not including an identifier of the data channel application, that the traffic type of the data channel application is the non-PS-data-off-exempt type.

In a possible design, the first communication device is calling user equipment, and the data channel control network element is a network element in an originating IMS network; or the first communication device is called user equipment, and the data channel control network element is a network element in a terminating IMS network.

According to a **second aspect**, an embodiment of this application provides a communication method. The method may be applied to an IMS application server or a component (for example, a circuit or a chip) in the IMS application server. For example, the method is applied to the IMS application server. In the method, the IMS application server obtains state information of a first communication device, where the state information indicates a data on/off state of the first communication device, and the data on/off state is on or off; and sends the state information to a data channel control network element, where the state information is for accepting or rejecting a request corresponding to request information sent by the first communication device, and the request information is for requesting to obtain a data channel application or requesting to use the data channel application.

In a possible design, obtaining the state information of the first communication device includes: receiving a registration request message or a re-registration request message from the first communication device, where the registration request message or the re-registration request message includes the state information.

In a possible design, sending the state information to the data channel control network element includes: receiving a session initiation protocol SIP message from an IMS communication control network element, where the SIP message is for managing a communication session between the first communication device and a second communication device, and the communication session is associated with a data channel; and sending the state information to the data channel control network element based on the SIP message.

In a possible design, sending the state information to the data channel control network element includes: sending a session event reporting message to the data channel control network element, where the session event reporting message includes the state information.

In a possible design, the request information is for requesting to use the data channel application, and the method further includes: receiving first response information from the data channel control network element, where the first response information indicates that the request corresponding to the request information is rejected, where the first response information includes reason information, and the reason information indicates that a reason for the rejection is that a traffic type of the data channel application is a non-PS-data-off-exempt type.

In a possible design, the reason information indicates that the reason for the rejection is that the traffic type of the data channel application is inconsistent with the data on/off state of the first communication device.

In a possible design, the request information is for requesting to use the data channel application, and the method further includes: receiving second response information from the data channel control network element, where the second response information indicates that the request corresponding to the request information is accepted. The second response information includes media resource information for establishing an application data channel corresponding to the data channel application.

In a possible design, the first communication device is calling user equipment, the IMS application server is a network element in an originating IMS network, and the data channel control network element is a network element in the originating IMS network; or the first communication device is called user equipment, the IMS application server is a network element in a terminating IMS network, and the data channel control network element is a network element in the terminating IMS network.

According to a **third aspect**, an embodiment of this application provides a communication method (or an information transfer method). In the method, an IMS application server obtains state information of a first communication device, where the state information indicates a data on/off state of the first communication device, and the data on/off state is on or off; the IMS application server sends the state information to a data channel control network element, where the data channel control network element receives the state information; the data channel control network element receives request information from the first communication device, where the request information is for requesting to obtain a data channel application or requesting to use the data channel application; and the data channel control network element rejects the request corresponding to the request information or accepts the request corresponding to the request information based on a traffic type of the data channel application and the data on/off state, where the traffic type is a PS data off exempt type or a non-PS-data-off-exempt type.

According to a **fourth aspect**, this application provides a communication apparatus. The communication apparatus has a function of implementing the first aspect or the second aspect. For example, the communication apparatus includes a corresponding module, unit, or means (means) for performing an operation in the first aspect or the second aspect, and the modules, units, or means may be implemented by software, or may be implemented by hardware, or may be implemented by hardware executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to the operations in the first aspect or the second aspect.

In a possible design, the communication apparatus includes a processor, and the processor may be configured to be coupled to a memory. The memory may store a computer program or instructions necessary for implementing the functions in the first aspect or the second aspect. The processor may execute the computer program or the instructions stored in the memory. When the computer program or the instructions are executed, the communication apparatus is enabled to implement the method in any possible design or implementation of the first aspect or the second aspect.

In a possible design, the communication apparatus includes a processor and a memory. The memory may store a computer program or instructions necessary for implementing the functions in the first aspect or the second aspect. The processor may execute the computer program or the instructions stored in the memory. When the computer program or the instructions are executed, the communication apparatus is enabled to implement the method in any possible design or implementation of the first aspect or the second aspect.

In a possible design, the communication apparatus includes a processor and an interface circuit. The processor is configured to: communicate with another apparatus through the interface circuit, and perform the method in any possible design or implementation of the first aspect or the second aspect.

It may be understood that in the fourth aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a **fifth aspect**, this application provides a communication system. The communication system may include an IMS application server and a data channel control network element. The data channel control network element is configured to perform the method provided in the first aspect, and the IMS application server is configured to perform the method provided in the second aspect.

According to a **sixth aspect**, this application provides a computer-readable storage medium, where the computer storage medium stores computer-readable instructions, and when a computer reads and executes the computer-readable instructions, the computer is caused to perform the method according to any one of the possible designs of the first aspect to the third aspect.

According to a **seventh aspect**, this application provides a computer program product. When a computer reads and executes the computer program product, the computer is enabled to perform the method according to any one of the possible designs of the first aspect to the third aspect.

According to an **eighth aspect**, this application provides a chip, where the chip includes a processor, and the processor is coupled to a memory, and is configured to read and execute a software program stored in the memory, to implement the method according to any one of the possible designs of the first aspect to the third aspect.

### BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a diagram of a data channel protocol stack according to an embodiment of this application;
FIG. 4 is a flowchart of obtaining a data channel application according to an embodiment of this application;
FIG. 5A to FIG. 5C are a schematic flowchart of communication between UE 1 and UE 2 through a data channel according to an embodiment of this application;
FIG. 6 is a schematic flowchart corresponding to a communication method according to an embodiment of this application;
FIG. 7 is a block diagram of a possible example of an apparatus according to an embodiment of this application; and
FIG. 8 is a diagram of a possible structure of an apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numerals used in this application are merely differentiated for ease of description, but are not used to limit the scope of this application. Sequence numbers of the foregoing processes do not mean a sequence of execution. The sequence of execution of the processes should be determined according to functions and internal logic of the processes. In the specification, the claims, and the accompanying drawings of this application, the terms "first", "second", and the like, and various other term numerals (if exists) are for distinguishing between similar objects, but are not necessarily for describing a specific order or sequence. It should be understood that the data termed in such a way are interchangeable in proper circumstances so that embodiments described herein can be implemented in other orders than the order illustrated or described herein. In addition, the terms "include", "have", and any variants thereof are intended to cover a non-exclusive inclusion. For example, a process, method, system, product, or device that includes a series of steps or units is not necessarily limited to those expressly listed steps or units, but may include other steps or units not expressly listed or inherent to such a process, method, product, or device.

The technical solutions provided in this application may be applied to various communication systems, for example, a 5th generation (5th generation, 5G) communication system (or referred to as a new radio (new radio, NR) system), a 4th generation (4th generation, 4G) communication system (or referred to as a long term evolution (long term evolution, LTE) system), an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system.

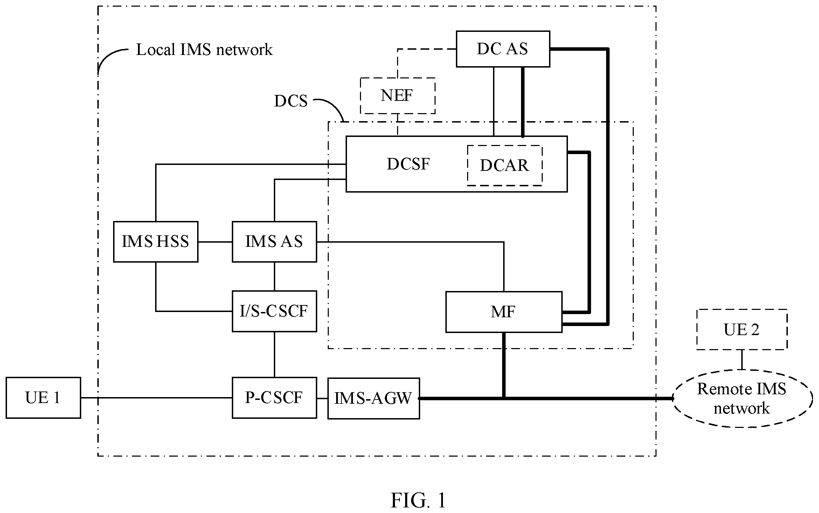

With reference to FIG. 1, the following uses an example to describe a communication system 100 according to an embodiment of this application. It should be understood that the communication system described in this application is merely an example, and should not constitute any limitation on this application. Network elements (or referred to as functional network elements, functional entities, nodes, devices, and the like) shown in FIG. 1 are briefly described herein.
1. Terminal device: The terminal device may be referred to as user equipment (user equipment, UE), a terminal, a terminal apparatus, an access terminal, a subscriber unit, a subscriber station, a mobile console, a mobile station (mobile station, MS), a mobile terminal (mobile terminal, MT), a remote station, a remote terminal, a mobile device, a user terminal, a terminal, a wireless communication device, a user agent, a user apparatus, or the like, and is a device having a wireless or wired communication capability. For example, the terminal device may be connected to a wireless access device through an air interface, or the terminal device may be connected to a wired access device through a wired interface. From a perspective of a product form, the terminal device may include a handheld device, a vehicle-mounted device, a wearable device, a compute device, or the like having a communication function. For example, the terminal device may be a mobile phone (mobile phone), a tablet computer (pad), a computer (for example, a notebook computer or a palmtop computer) with a wireless communication function, a mobile internet device (mobile internet device, MID), a virtual reality (virtual reality, VR) terminal, an augmented reality (augmented reality, AR) terminal, a smartwatch, a smart band, smart glasses, a wireless terminal in industrial control (industrial control), a wireless terminal in self driving (self driving), a wireless terminal in telemedicine (remote medical), a wireless terminal in a smart grid (smart grid), a wireless terminal in transport safety (transportation safety), a wireless terminal in smart city (smart city), a wireless terminal in smart home (smart home), a cellular phone, a cordless phone, a SIP phone, a wireless local loop (wireless local loop, WLL) station, a personal digital assistant (personal digital assistant, PDA), a handheld device with wireless communication functions, another processing device connected to wireless modems, a terminal in an internet of things (internet of things, IoT) system, a desktop computer, UE defined in 3rd generation partnership project (3rd generation partnership project, 3GPP) standard specifications, or the like. This is not limited.

In network architectures provided in embodiments of this application, different UE may perform an IMS call through IMS networks. For example, UE 1 and UE 2 in FIG. 1 may perform an IMS call through IMS networks. The UE 2 may be referred to as a peer device that performs the IMS call with the UE 1. Similarly, the UE 1 may be referred to as a peer device that performs the IMS call with the UE 2. It is assumed that the UE 1 is calling user equipment, and the UE 2 is called user equipment. In this case, an IMS network that provides a service for the UE 1 may be referred to as an originating IMS network (originating IMS), and an IMS network that provides a service for the UE 2 may be referred to as a terminating IMS network (terminating IMS). In addition, for the UE 1, the originating IMS network is a local IMS network (local IMS), and the terminating IMS network is a remote IMS network (remote IMS). For the UE 2, the terminating IMS network is a local IMS network, and the originating IMS network is a remote IMS network. It may be understood that a network element architecture inside the terminating IMS network is similar to a network element architecture inside the originating IMS network. For brevity, the network element architecture inside the remote IMS network is not shown in the figure.

2. Call session control function (call session control function, CSCF) network element: A CSCF is a function entity inside an IMS, and is a core of the entire IMS. The CSCF is mainly responsible for processing signaling control in a multimedia call session process. The CSCF manages user authentication of the IMS and quality of service (quality of service, QoS) on an IMS bearer plane, cooperates with another network element to perform session initiation protocol (session initiation protocol, SIP) session control, service negotiation, and resource allocation, and the like. For convenience of description, the CSCF network element in this application is referred to as the "CSCF". The CSCF may communicate with a terminal device, and the CSCF may communicate with a gateway device. For example, the CSCF may select a gateway device for communication with a terminal device. In addition, the CSCF may allocate routing information, for example, an IP address or a port, to the terminal device and the gateway device.

By way of example but not limitation, the CSCF is classified into a proxy-CSCF (proxy-CSCF, P-CSCF), an interrogating-CSCF (interrogating-CSCF, I-CSCF), a serving-CSCF (serving-CSCF, S-CSCF), and the like based on functions. The P-CSCF is an entry point for a user to access the IMS network, and is mainly responsible for forwarding SIP signaling between the IMS user and a home network. The I-CSCF is a unified entry point of a home network of an IMS user, and is responsible for allocating or querying for an S-CSCF that serves the user. The S-CSCF is a unified entry point of a home network of an IMS user, and is responsible for allocating or querying for an S-CSCF that serves the user. It may be understood that the P-CSCF, the S-CSCF, and the I-CSCF may be independently disposed in different entities, or may be integrated into a same entity. This is not limited in this application.

The IMS communication control network element in the following embodiments of this application may be a CSCF, and further, for example, may be an S-CSCF.
3. IMS access media gateway (access media gateway, AGW): The IMS AGW may provide functions of an IMS network access gateway and media gateway.
4. Data channel server (data channel server, DCS): The DCS can be classified into two logical functional entities: a data channel signaling function (data channel signaling function, DCSF) network element and a media function (media function, MF) network element. The MF network element is configured to provide a media resource management function, including media resource management of a data channel. The DCSF network element is configured to provide a data channel signaling control function. It may be understood that in actual network deployment, the DCSF network element and the MF network element may be integrated (referred to as the DCS in this case), or may be separated. This is not limited in this application.
5. Data channel application repository (data channel application repository, DCAR): The DCAR is a repository for storing a data channel application (data channel application, DC App). After a developer completes development of a DC App, the developer uploads the DC App to a DCS of an operator, and the DCS then stores the DC App in the DCAR. The DCS downloads the DC App from the DCAR to a local when necessary, for subsequent processing.

The data channel control network element (that is, the DC control network element) in embodiments of this application includes the DCSF, and optionally further includes the DCAR.
6. Home subscriber server (home subscriber server, HSS): The HSS serves as a database for storing user information in the IMS, and the user stores user data. By way of example but not limitation, the user data may include information that is about a data channel service and that is subscribed to by the user and the operator to use.
7. IMS application server (application server, AS): The IMS AS is an application layer device at a top layer of the IMS system, and provides basic services and supplementary services, for example, a multimedia conference, convergent communication, a short message service gateway, and a standard attendant console. The IMS network is an IP bearer-based open system that provides various multimedia services for the user. The IMS AS interacts with the CSCF to trigger and execute various network services. In addition, the terminal device is communicatively connected to the IMS AS. The IMS AS may establish a data channel for the terminal device. For example, the IMS AS may be a multimedia telephony application server (multimedia telephony application server, MMTEL AS) or a telephony application server (telephony application server, TAS).
8. Data channel application server (data channel application server, DC AS): The DC AS provides data channel service logic. It may be understood that the DC AS may be deployed in an IMS network. In this case, the DC AS may be directly connected to another network element in the IMS network through an interface (for example, a service-based interface). Alternatively, the DC AS may be deployed outside the IMS network. In this case, the DC AS may be connected to another network element in the IMS network through a network exposure function (network exposure function, NEF) network element (or an IMS border network management system).
9. NEF network element: The NEF network element is configured to securely expose various services of a 5GC network to a third party.

The foregoing network architecture applied to embodiments of this application is merely an example, and a network architecture applicable to embodiments of this application is not limited thereto. Any network architecture that can implement functions of the foregoing network elements is applicable to embodiments of this application. In other words, the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

It may be further understood that the network elements or devices listed in the foregoing network architecture are merely examples for description, and the network architecture suitable for this application may further include another network element or device. This is not limited in this application.

It may be further understood that names of the foregoing network elements or devices are defined only for ease of distinguishing between different functions, and should not constitute any limitation on this application. This application does not exclude a possibility of using other names in a 4G network, a 5G network, and another future network. For example, in a 6G network, a part or all of the network elements may reuse terms in 4G/5G, or may use other names.

Based on the network architecture shown in FIG. 1, to facilitate understanding of the technical solutions in embodiments of this application, some terms or concepts that may be used in embodiments of this application are described herein.

### 1. Communication session

The communication session in embodiments of this application is an IMS session, and is for transmitting data in a communication service, for example, data between terminal devices in the communication service and/or data between a terminal device and a communication network in the communication service.

The communication service is a service, such as a voice call, a video call, or data exchange, that is performed between the terminal device and one or more other terminal devices through connection over a communication network (for example, an IMS network), where the terminal device participates in the service as an originating party (originating party) or a terminating party (terminating party). The IMS network is an IP bearer-based open system that provides various multimedia services for users. The communication service may temporally cover an entire process from communication establishment (for example, dialing) to communication termination, or cover a part of the process from communication establishment (for example, dialing) to communication termination, for example, a process from a time when the parties participating in the communication service enters a communication state to a time when the communication is terminated. The communication service may be a one-to-one communication service, or may be a one-to-many (for example, a conference) communication service. In embodiments of this application, the one-to-one communication service is used as an example, but all related solutions may be applied to the one-to-many communication service.

The IMS session may be understood as a logical connection between communication apparatuses in the communication service, for example, may be understood as a logical connection between the terminal devices in the communication service, and may transmit data between the terminal devices; or may be understood as a logical connection between the terminal device in the communication service and the communication network, and is for transmitting data between the terminal device and the communication network. In a specific application, the IMS session may be negotiated (or established) based on a session initiation protocol (session initiation protocol, SIP)/session description protocol (session description protocol, SDP). It should be understood that the IMS session may also be replaced with a communication session, an IMS communication session, a session, a session of a communication service, or the like. This is not limited.

It may be understood that one communication service may correspond to at least one IMS session. A communication service between UE 1 and UE 2 is used as an example. The communication service corresponds to one IMS session, for example, an IMS session between the UE 1 and the UE 2. A communication service between UE 1, UE 2, and UE 3 is used as an example. The communication service corresponds to one IMS session, for example, an IMS session between the UE 1, the UE 2, and the UE 3. Alternatively, the communication service corresponds to three IMS sessions, for example, an IMS session between the UE 1 and the UE 2, an IMS session between the UE 1 and the UE 3, and an IMS session between the UE 2 and the UE 3.

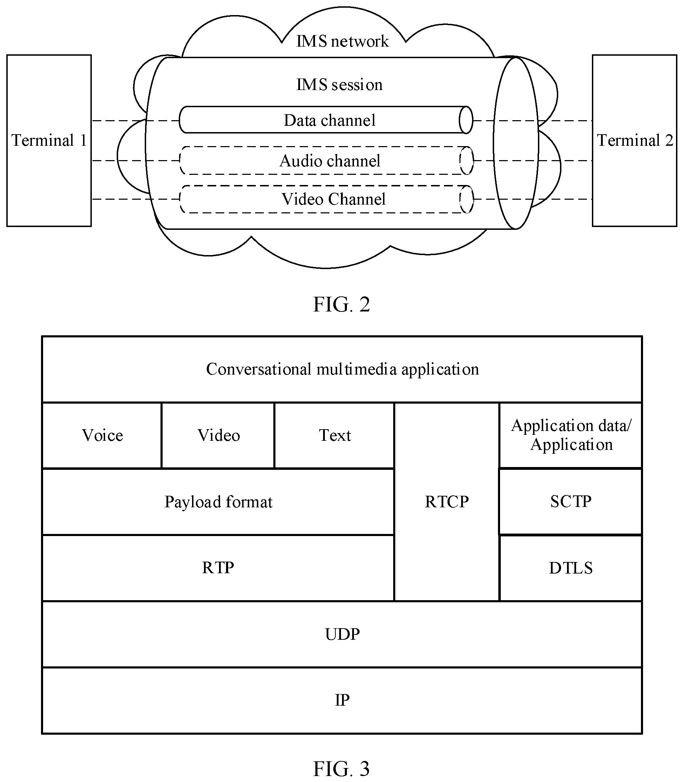

It may be understood that, to transmit various types of data, a channel for transmitting corresponding types of data may be established based on an IMS session. For example, channels may be classified into a media channel and a data channel based on traffic types. In some scenarios, the media channel may be further classified into an audio channel and a video channel. For example, in FIG. 2, UE 1 and UE 2 may communicate with each other over an IMS network, and channels established based on an IMS session between the UE 1 and the UE 2 include a data channel, an audio channel, and a video channel. It may be understood that FIG. 2 is merely an example of the IMS session. During specific application, a channel established based on an IMS session may include a data channel but do not include a media channel, or a channel established based on an IMS session includes one of an audio channel and a video channel and a data channel. This is not limited in embodiments of this application.

In embodiments of this application, the audio channel may be for transmitting a voice, and the video channel may be for transmitting a video. The following describes the data channel in detail.

### 2. Data channel

The data channel in embodiments of this application is also referred to as an IMS data channel, and is associated with an IMS session of a terminal device, that is, created based on the IMS session of the terminal device, or created during the IMS session of the terminal device, and is for transmitting application data or an application program (that is, a program for generating/consuming application data) related to the terminal device during a lifetime of the IMS session.

For example, the data channel in embodiments of this application may be classified into at least the following types based on a relationship between the data channel and an audio call or a video call.
(1) In an IMS session process, when an audio call or a video call exists between the terminal device and another session participant (which may be another terminal device or a network element on a network side), a data channel also exists. In this case, the data channel may be referred to as an auxiliary data channel (auxiliary data channel) or a dependent data channel (dependent data channel).
(2) In an IMS session process, when only a data channel exists between the terminal device and another session participant, and no conventional audio call or video call exists, the data channel may be referred to as a standalone data channel (standalone data channel) or an independent data channel (independent data channel).

Both the auxiliary data channel and the standalone data channel can be for transmitting any type of application data between session participants. For example, in embodiments of this application, uses of the data channel or types of data that may be transmitted in the data channel include at least the following several possible types.
(1) Application data transmitted in the data channel may be interactive application data (interactive application data) that is referred to as interactive data (interactive data) for short. The interactive application data may be application data for supporting an interactive operation (for example, data or code/script for generating a graphical user interface (graphical user interface, GUI), where the GUI is for a user to perform an interactive operation, for example, a "like" icon or a "red packet" icon), may be application data generated by performing the interaction operation (for example, a control instruction, a control signal, or an output file generated after the session participant performs the interaction operation, for example, a quantity of "likes" and an amount in a "red packet"), or may be data collected or stored by the terminal device, for example, data collected by the terminal device via an input/output (input/output system, I/O) module, for example, an image or a video captured via a camera, a voice captured via a microphone, text, a symbol, or an emoticon entered via a keyboard, or data generated by performing an action like tapping/sliding on a touchscreen.
(2) Application data transmitted in the data channel may alternatively be communication enhancement application data (communication enhancement application data) that is referred to as communication enhancement data (communication enhancement data) for short. The communication enhancement data may be data generated based on content of an audio call or a video call, for example, text converted from a voice in the audio call or the video call, or text or a voice converted from a sign language in the video call; may be data superimposed based on the audio call or the video call, for example, an AR special effect picture; or may be data independent of the audio call or the video call, for example, geographical location data or screen sharing data.
(3) Application data transmitted in the data channel may alternatively be a remote control command. In this case, a remote control service or a remote IoT device connection service may be provided for the user. It may be understood that, in the foregoing case, the data channel may also be for transmitting the remote control command.
(4) An application transmitted in the data channel may be an installation package, executable code, or a script of the application. The application may be an interaction enhancement application or a communication enhancement application configured to enhance interaction effect or communication effect of a conventional voice call/video call, or may be a remote control application or an IoT communication application. This is not limited in embodiments of this application.

In an example, data channels are classified into two types based on different uses: a bootstrap data channel (bootstrap data channel, BDC) and an application data channel (application data channel, ADC). The BDC is for the terminal device to obtain the DC App from the DCS. The ADC is for transmitting interaction data generated by the DC Apps running on the two communication parties.

### 3. Protocol stack of an IMS session

In embodiments of this application, the protocol stack of the IMS session indicates a sum of protocols applicable to the IMS session, and may reflect a data transmission process in the IMS session. As mentioned above, various data (for example, a voice, a video, text, and data other than a voice, a video, and text) may be transmitted in the IMS session. Therefore, to match transmission requirements of different types of data, different protocols may be configured for channels of different types of data. For example, the protocol stack of the IMS session may be shown in FIG. 3.

In FIG. 3, a bottom-layer protocol of an audio channel, a video channel, and a data channel is an internet protocol (internet protocol, IP), and a user datagram protocol (user datagram protocol, UDP) is over the IP. For the foregoing channels, protocols over the UDP are different. The following separately provides descriptions. For the audio channel or the video channel, a real-time transport protocol (real-time transport protocol, RTP) or an RTP control protocol (RTP control protocol, RTCP) is over the UDP. Voice, video, or text payloads (payloads) may be encapsulated in the RTP, and then a conversational multimedia application (conversational multimedia application) is over the RTP. The conversational multimedia application is also over the RTCP. For the data channel, a datagram transport layer security (datagram transport layer security, DTLS) protocol is over the UDP, a stream control transmission protocol (stream control transmission protocol, SCTP) is over the DTLS protocol, application data/an application is over the SCTP, and a conversational multimedia application is over the application data/the application.

It may be understood that the UDP, RTP, RTCP, DTLS protocol, and SCTP are all transport layer protocols. Therefore, a UDP/RTP protocol stack may be understood as a type of transport layer protocol stack of the audio channel/video channel, a UDP/RTCP protocol stack may be understood as another type of transport layer protocol stack of the audio channel/video channel, and a UDP/DTLS/SCTP protocol stack may be understood as a transport layer protocol stack of the data channel. In embodiments of this application, the symbol "/" used to describe a protocol stack indicates a hierarchical relationship between protocols in the protocol stack. For example, the UDP/DTLS/SCTP protocol stack indicates that the DTLS protocol is over the UDP, and the SCTP is over the DTLS protocol.

It may be understood that, in embodiments of this application, the transport layer protocol stack of the data channel is not limited to the "UDP/DTLS/SCTP" protocol stack shown in FIG. 3, and may alternatively be another protocol stack, for example, a "TCP/DTLS/SCTP" protocol stack, a "UDP/QUIC" (QUIC is short for quick UDP internet connection (quick UDP internet connection)) protocol stack, or a "UDP/SCTP" protocol stack.

### 4. Data channel application

The data channel application in embodiments of this application is an application that provides a service based on a data channel. The data channel application is usually downloaded by the terminal device from a network side, runs during an IMS communication session, and does not need to be installed or uninstalled. It may be understood that the data channel application may exist in a form of a web page, or may exist in a form of a mini program, a quick App, a light App, or the like. This is not limited in this application.

For example, the data channel application in embodiments of this application may be a DC App in a 4G/5G network. The DC App can transfer various data such as texts, images, locations, and files before and after an IMS call is established, to implement communication between two communication parties other than a voice call or a video call, thereby greatly improving experience of the two communication parties.

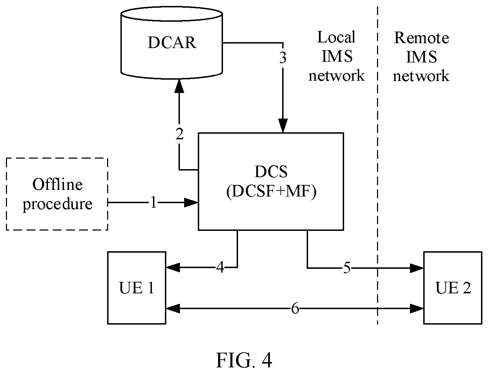

The terminal device may obtain the DC App from the DCS through the BDC by using a hypertext transfer protocol (hypertext transfer protocol, HTTP) procedure, automatically or interactively update the DC App at any time, and then communicate with a peer terminal device through the DC App other than a voice call or a video call. For example, UE 1 and UE 2 are in a same IMS communication session. It is assumed that in a call process between UE 1 and UE 2, the UE 1 expects to share a mobile phone screen of the UE 1 with the UE 2 to indicate B to perform mobile phone setting. In this case, the UE 1 and UE 2 may first separately obtain a DC App for screen sharing, then, separately run the DC App to perform communication other than a voice call or a video call with the peer UE. With reference to a flowchart shown in FIG. 4, the following briefly describes a procedure in which a terminal device obtains a DC App. In an example provided in FIG. 4, an example in which UE 1 and UE 2 are respectively calling user equipment and called user equipment is used for description.
(1) A developer develops the DC App through an offline procedure and uploads the developed DC App to an operator's DCS.
(2) The DCS stores the DC App in a DCAR.
(3) The DCS downloads the DC App from the DCAR when necessary.
(4) The UE 1 establishes a BDC with the DCS, and obtains the required DC App from the DCS through the BDC.
(5) The UE 2 establishes a BDC with the DCS, and obtains the required DC App from the DCS through the BDC.
(6) The UE 1 and the UE 2 establish an ADC for transmitting interaction data of the DC App.

### 5. Session event reporting message

In embodiments of this application, the IMS application server may send a session event reporting message to the DC control network element. The session event reporting message is a non-SIP message, for example, may be an HTTP message. The session event reporting message may be for reporting an event of a communication session. For example, the event of the communication session may include one or more of the following:
a session establishment request event (SessionEstablishmentRequestEvent) indicating that the IMS AS receives a SIP INVITE request message,
a session establishment progress event (SessionEstablishmentProgressEvent) indicating that the IMS AS receives a SIP INVITE response message,
a session establishment success event (SessionEstablishmentSuccessEvent) indicating that a communication session is successfully established,
a session establishment failure event (SessionEstablishmentFailureEvent) indicating that a communication session fails to be established,
a media change request event (MediaChangeRequestEvent) indicating that the IMS AS receives a request for changing a media resource, where further, the media change request event may include an ADC establishment request event and an ADC teardown request event, the ADC establishment request event indicates that the IMS AS receives an ADC establishment request, and the ADC teardown request event indicates that the IMS AS receives an ADC teardown request,
a media change success event (MediaChangeSuccessEvent) indicating that a media resource change request succeeds,
a media change failure event (MediaChangeFailureEvent) indicating that a media resource change request fails, and
a session termination event (SessionTerminationEvent) indicating that a session is terminated.

It may be understood that the event of the communication session may alternatively be another possible event. This is not limited in embodiments of this application.

### 6. Packet switched data off

To enable a user to explicitly control sent or received data, the 3GPP introduces a packet switched (packet switched) data off (PS Data Off) function. The PS Data Off function of the terminal device corresponds to a data switch of the terminal device. When the PS Data Off function of the terminal device is activated, the data on/off state of the terminal device is off. When the PS Data Off function of the terminal device is inactive or deactivated, the data on/off state of the terminal device is on. The data on/off state of the terminal device may be set or changed by the user.

When the data on/off state of the terminal device is off, all applications other than a PS Data Off exempt service (that is, PS Data Off Exempt Service, which may be referred to as a PS data off exempt service) cannot access a PS network. For details, refer to 3GPP TS 22.011. As described in a current protocol (for example, 3GPP TS 23.228), a network may deliver a PS data off exempt service list to the terminal device during registration of the terminal device, or the PS data off exempt service list may be configured for the terminal device in another manner.

In embodiments of this application, an application type is a PS data off exempt type or a non-PS-data-off-exempt type. An application of the PS data off exempt type may be referred to as a PS data off exempt application or a PS data off exempt service. An application of the non-PS-data-off-exempt type may be referred to as a non-PS-data-off-exempt application or a non-PS-data-off-exempt service. The PS data off exempt application means an application that is still allowed to access the PS network even if the user has activated the PS Data Off function in the terminal device. The non-PS-data-off-exempt application means an application that is not allowed to access the PS network when the user activates the PS Data Off function in the terminal device. In other words, when a data on/off state of the terminal device is off, the application of the PS data off exempt type is allowed to access the PS network, that is, the terminal device is allowed to obtain or use the application of the PS data off exempt type, but the application of the non-PS-data-off-exempt type is not allowed to access the PS network, that is, the terminal is not allowed to obtain or use the application of the non-PS-data-off-exempt type.

The foregoing describes related terms. The following describes a possible call procedure based on the network architecture shown in FIG. 1, to describe a data channel between two communication parties (for example, the UE 1 and the UE 2).

The UE 1 and the UE 2 are two devices in a same IMS call session, or the UE 1 and the UE 2 are peer devices to each other in the IMS communication session. It is assumed that the UE 1 is calling user equipment, and the UE 2 is called user equipment. For ease of description, network elements in an originating network in embodiments of this application are respectively denoted as an IMS core (IMS core) 1, an IMS AS 1, and a DCS 1 (or a DCSF 1), and network elements in a terminating network in embodiments of this application are respectively denoted as an IMS core 2, an IMS AS 2, and a DCS 2 (or a DCSF 2). It may be understood that the foregoing network elements are merely examples, and the originating network and the terminating network may further include other network elements. This is not limited in this application. Both the UE 1 and the UE 2 are multimedia telephony service for IMS (multimedia telephony service for IMS, MTSI) terminals (that is, DC MTSI terminals) supporting the data channel, and both the originating network and the terminating network support the data channel.

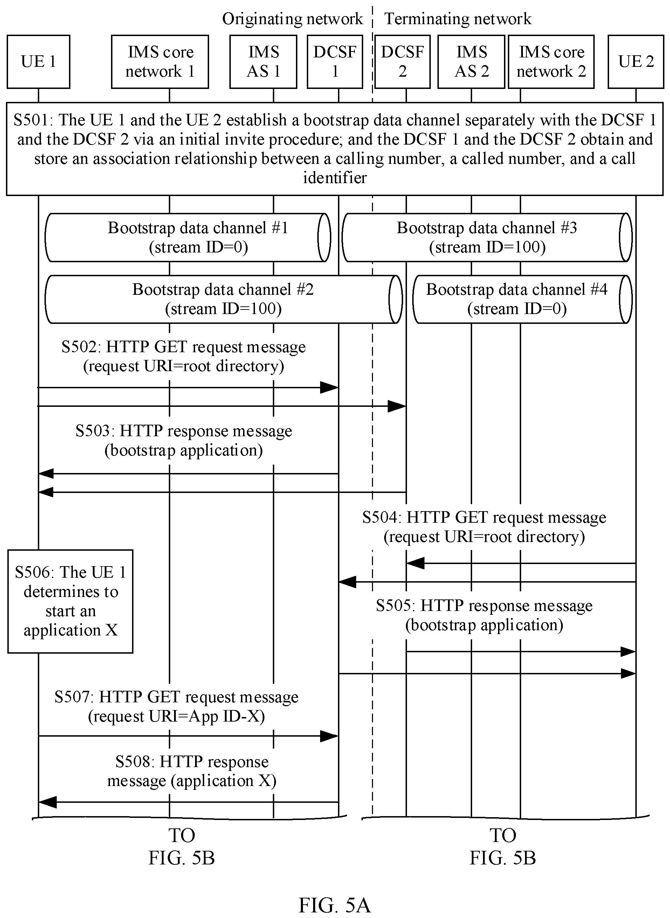

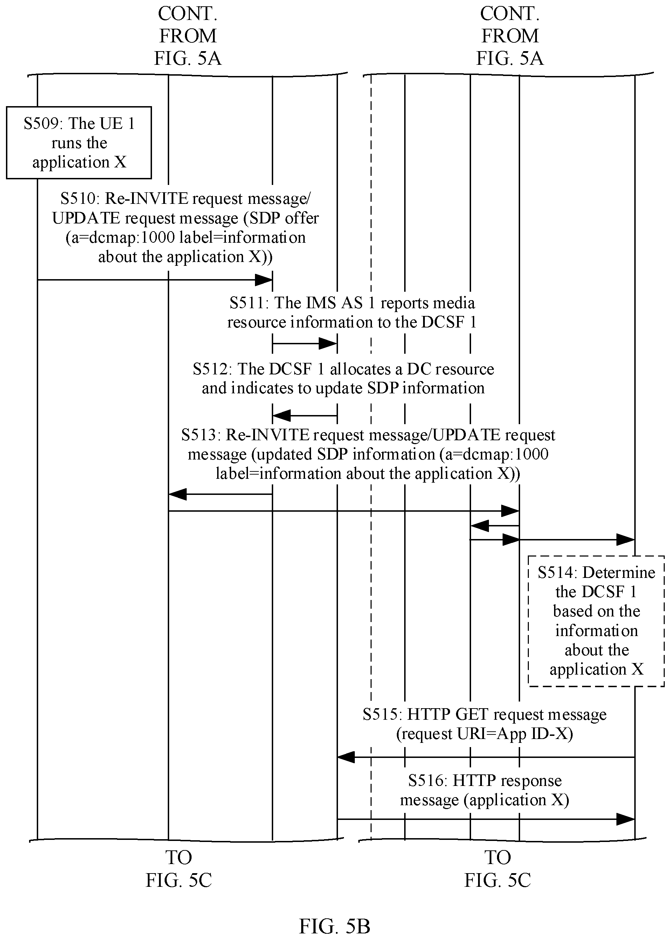

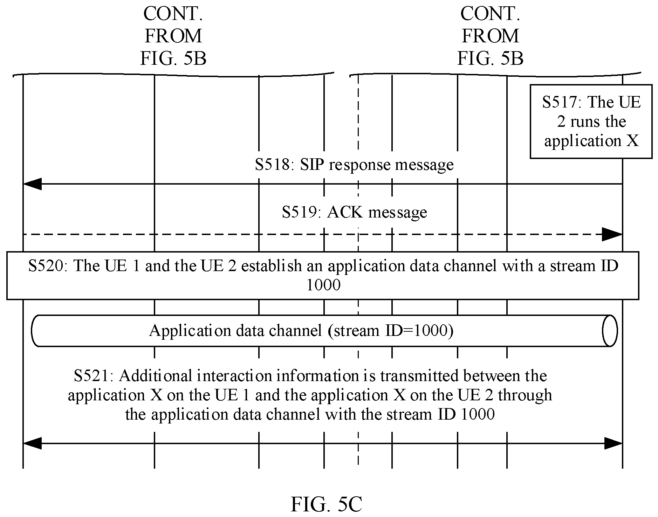

FIG. 5A to FIG. 5C are a schematic flowchart of communication between UE 1 and UE 2 through a data channel. As shown in FIG. 5A to FIG. 5C, the procedure may include the following steps.

S501: The UE 1 and the UE 2 establish a bootstrap data channel separately with a DCSF 1 and a DCSF 2 via an initial invite (INVITE) procedure; and the DCSF 1 and the DCSF 2 obtain and store an association relationship between a calling number, a called number, and a call identifier (Call ID).

For example, when the UE 1 and the UE 2 need or desire to perform communication other than a voice call or a video call by using a data channel application, the UE 1 and the UE 2 may establish the bootstrap data channel separately with the DCSF 1 and the DCSF 2 via the initial invite procedure, to obtain bootstrap applications through the bootstrap data channels. For example, as shown in FIG. 5A to FIG. 5C, the UE 1 establishes a bootstrap data channel #1 between the UE 1 and the DCSF 1, and a bootstrap data channel #2 between the UE 1 and the DCSF 2. The UE 2 establishes a bootstrap data channel #3 between the UE 2 and the DCSF 1, and a bootstrap data channel #4 between the UE 2 and the DCSF 2.

For convenience, in this embodiment of this application, a bootstrap data channel between UE and an originating DCSF (that is, a DCSF in an originating network) is denoted as a bootstrap data channel with a stream ID 0 (that is, a stream ID of the bootstrap data channel=0), and a bootstrap data channel between UE and a terminating DCSF (that is, a DCSF in a terminating network) is denoted as a bootstrap data channel with a stream ID 100 (that is, a stream ID of the bootstrap data channel=100). Therefore, the bootstrap data channel #1 and the bootstrap data channel #4 are bootstrap data channels with a stream ID 0, and the bootstrap data channel #2 and the bootstrap data channel #3 are bootstrap data channels with a stream ID 100. It may be understood that the stream IDs corresponding to the bootstrap data channels are merely examples, and other stream IDs may alternatively be used to indicate different bootstrap data channels. For example, a bootstrap data channel between UE and a local DCSF may be donated as a bootstrap data channel with a stream ID 10 (that is, a stream ID=10), and a bootstrap data channel between UE and a peer DCSF may be donated as a bootstrap data channel with a stream ID 110 (that is, a stream ID=110). This is not limited in this application.

The DCSF 1 and the DCSF 2 may separately obtain and store the association relationship between the calling number, the called number, and the Call ID. For example, the UE 1 and the UE 2 perform media negotiation via an INVITE procedure, to negotiate for media resource information required for establishing the bootstrap data channels #1, #2, #3, and #4, and the DCSF 1 and the DCSF 2 obtain and store the association relationship between the calling number, the called number, and the call ID via the INVITE procedure. In addition, the DCSF 1 further obtains the media resource information for the bootstrap data channel #1 and the bootstrap data channel #3, and the DCSF 2 further obtains the media resource information for the bootstrap data channel #2 and the bootstrap data channel #4.

Further, the UE 1 and the UE 2 separately request the DCSF 1 and the DCSF 2 to obtain a bootstrap application through the established bootstrap data channels. The following provides descriptions by using S502 to S505 as an example.

S502: The UE 1 separately sends an HTTP GET request (HTTP GET Request) message to the DCSF 1 and the DCSF 2, where a request URI (Request URI) of the HTTP GET request message is a root directory, to indicate that the UE 1 requests to obtain a DC application list. Correspondingly, the DCSF 1 and the DCSF 2 separately receive the HTTP GET request message from the UE 1.

S503: The DCSF 1 and the DCSF 2 separately send an HTTP response message to the UE 1, where the HTTP response message includes the DC application list. Correspondingly, the UE 1 receives the HTTP response messages from the DCSF 1 and the DCSF 2 respectively.

For example, the UE 1 sends the HTTP GET request message to the DCSF 1 through the bootstrap data channel #1 (that is, the bootstrap data channel with the stream ID 0). In addition, the request URI (Request URI) of the HTTP GET request message is the root directory, to indicate that the UE 1 requests to obtain the DC application list on the DCSF 1. In response to the HTTP GET request message, the DCSF 1 sends the HTTP response message to the UE 1 through the bootstrap data channel #1, and the response message carries the DC application list on the DCSF 1. For convenience, the DC application list sent by the DCSF 1 to the UE 1 is denoted as a bootstrap application #1, and the bootstrap application #1 includes a DC application list available to the UE 1 on the originating network.

Similarly, the UE 1 obtains a bootstrap application (denoted as a bootstrap application #2) on the DCSF 2 from the DCSF 2 through the bootstrap data channel #2, where the bootstrap application #2 includes a DC application list available to the UE 1 on the terminating network.

S504: The UE 2 sends an HTTP GET request message separately to the DCSF 1 and the DCSF 2, where a request URI of the HTTP GET request message is a root directory, to indicate that the UE 2 requests to obtain a bootstrap application. Correspondingly, the DCSF 1 and the DCSF 2 separately receive the HTTP GET request message from the UE 2.

S505: The DCSF 1 and the DCSF 2 separately send an HTTP response message to the UE 2, where the HTTP response message includes the bootstrap application. Correspondingly, the UE 2 receives the HTTP GET response messages from the DCSF 1 and the DCSF 2 respectively.

It may be understood that S504 and S505 are respectively similar to S502 and S503, and a specific process is not limited herein. Through S504 and S505, the UE 2 may obtain a bootstrap application (denoted as a bootstrap application #3) on the DCSF 1 from the DCSF 1 through the bootstrap data channel #3, and obtain a bootstrap application (denoted as a bootstrap application #4) on the DCSF 2 from the DCSF 2 through the bootstrap data channel #4.

It may be understood that a sequence of performing S502 and S503 and a sequence of performing S504 and S505 are not limited in this application.

S506: The UE 1 determines to start an application X, that is, determines that the application X needs to be obtained.

For example, when detecting that the user selects the application X, the UE 1 determines to start the application X. For example, the application X is any data channel application in the bootstrap application #1 obtained by the UE 1.

For example, after obtaining the bootstrap application #1, the UE 1 displays the obtained bootstrap application #1 (that is, the DC application list) on a screen. The UE 1 may display the bootstrap application on the screen in a form of a picture, a text, or the like. The user may select any data channel application from the DC application list displayed on the screen. When the user selects the application X, the UE 1 determines to start the application X. It may be understood that each DC application in the bootstrap application #1 corresponds to one App ID, and the App ID may uniquely identify one DC application on the DCSF 1 and map the DC application to a resource location of the application on the DCSF.

S507: The UE 1 sends an HTTP GET request message to the DCSF 1. Correspondingly, the DCSF 1 receives the HTTP GET request message from the UE 1.

For example, when the UE 1 determines to start the application X, the UE 1 sends an HTTP GET request message to the DCSF of the network to which the application X belongs, to request to obtain the application X. For example, the UE 1 sends the HTTP GET request message to the DCSF 1 through the bootstrap data channel #1 (that is, the bootstrap data channel with the stream ID 0). A request URI (Request URI) of the HTTP GET request message is an App ID (denoted as an App ID-X) of the application X, and is for requesting to obtain the application X, or is for requesting an installation package of the application X.

It may be understood that the foregoing is described by using an example in which the UE 1 obtains the application X in an IMS call setup stage. However, this application is not limited thereto. For example, the UE 1 may alternatively obtain the application X after the IMS call is connected. In this case, in S601, the UE 1 and the UE 2 need to negotiate for establishing bootstrap data channels via a re-INVITE procedure (instead of the initial INVITE procedure).

S508: The DCSF 1 sends an HTTP response message to the UE 1. Correspondingly, the UE 1 receives the HTTP response message from the DCSF 1.

For example, after receiving the HTTP GET request message from the UE 1, the DCSF 1 determines a resource location of the application X based on the App ID-X, then sends the HTTP response message to the UE 1 through the data channel #1, and carries the application X to the HTTP response message, that is, carries the installation package of the application X.

Correspondingly, the UE 1 receives the HTTP response message from the DCSF 1, and obtains the installation package of the application X from the HTTP response message.

S509: The UE 1 runs the application X, that is, uses the application X.

For example, after obtaining the application X, the UE 1 runs the application X. For example, the UE 1 displays, in a web browser, an HTML page corresponding to the application X and executes a JavaScript script in the HTML page.

Further, the UE 1 and the UE 2 negotiate for media resource information of an application data channel required by the application X, so that the UE 1 and the UE 2 can perform communication other than a voice call or a video call via the application X. The following provides an example for description with reference to S510 to S519.

S510: The UE 1 sends a re-INVITE (re-INVITE) request message/UPDATE (UPDATE) request message to an IMS AS 1. Correspondingly, the IMS AS 1 receives the re-INVITE request message/UPDATE request message from the UE 1.

For example, after the UE 1 executes a JavaScript script in the application X, the UE 1 is triggered to send the re-INVITE request message to the UE 2, where the re-INVITE request message is used to negotiate for the media resource information of the application data channel required by the application X.

The re-INVITE request message includes SDP information (for example, SDP Offer information), where the SDP Offer information includes media resource information of an application data channel supported (or intended to be used) by the UE 1 (for example, an IP address, port information, a TLS ID and a certificate, and a QoS requirement for the UE 1 to interconnect with an application data channel with a stream ID 1000). Optionally, the SDP Offer information further includes information about the application X, for example, an identifier (App ID-X) of the application X. The identifier of the application X is for the UE 2 to obtain the application X.

Optionally, the information about the application X further includes information for downloading the application X. The information for downloading the application X is for the UE 2 to determine how to obtain the application X (that is, a network from which the application X is obtained, or a bootstrap data channel through which the application X is obtained). The information for downloading the application X and the identifier of the application X may be carried in a same parameter of an attribute line, or may be carried in different parameters of a same attribute line, or may be carried in different attribute lines. This is not limited in this application.

S511: The IMS AS 1 reports, to the DCSF 1, the media resource information of the application data channel supported by the UE 1.

S512: The DCSF 1 allocates a DC resource and indicates to update an SDP offer, so that the IMS AS 1 updates the SDP offer information.

For example, after the IMS AS 1 receives the re-INVITE request message/UPDATE request message from the UE 1, the IMS AS 1 reports the media resource information of the application data channel to the DCSF 1, and the DCSF 1 allocates the DC resource for the corresponding application data channel based on the information, and indicates the IMS AS 1 to update the SDP Offer information. Further, the IMS AS 1 updates the SDP offer information according to an indication of the DCSF 1. For example, the application data channel passes through a network side (that is, UE 1-network side-UE 2). The DCSF 1 may send, to the IMS AS 1, media resource information of an application data channel supported by the network side, so that the IMS AS 1 updates the SDP offer information to the media resource information of the application data channel supported by the network side. A specific manner is not limited in this application. It may be understood that the IMS AS 1 reserves (in other words, does not modify) the information about the application X carried in the SDP offer information.

S513: The IMS AS 1 sends a re-INVITE request message/UPDATE request message to the UE 2. Correspondingly, the UE 2 receives the re-INVITE request message/UPDATE request message from the IMS AS 1.

For example, after updating the SDP offer information, the IMS AS 1 routes the re-INVITE request message/UPDATE request message to the UE 2 via the IMS core 1, the IMS core 2, and the IMS AS 2. For convenience, the following uses the re-INVITE request message as an example for description. The re-INVITE request message includes updated SDP offer information, and the updated SDP offer information includes the information about the application X described in S510.

Optionally, S514: The UE 2 determines the DCSF 1 based on the information about the application X.

For example, after receiving the re-INVITE request message, the UE 2 parses the parameter of the attribute line corresponding to the application data channel to obtain the information about the application X. The information about the application X includes the APP ID-X, and the UE 2 determines, based on the APP ID-X, to obtain the application X corresponding to the APP ID-X. Optionally, the information about the application X further includes the information for downloading the application X. The UE 2 determines the DCSF 1 based on the information for downloading the application X, that is, determines to request the DCSF 1 in the originating network to obtain the application X.

S515: The UE 2 sends an HTTP GET request message to the DCSF 1. Correspondingly, the DCSF 1 receives the HTTP GET request message from the UE 2.

For example, the UE 2 sends the HTTP GET request message to the DCSF 1 through the bootstrap data channel #3 (namely, the bootstrap data channel with the stream ID 100) based on the received information about the application X, where a request URI (Request URI) of the HTTP GET request message is the App ID-X, for requesting to obtain the application X.

S516: The DCSF 1 sends an HTTP response message to the UE 1. Correspondingly, the UE 2 receives the HTTP response message from the DCSF 1.

For example, after receiving the HTTP GET request message from the UE 2, the DCSF 1 determines a resource location of the application X based on the App ID-X, then sends the HTTP response message to the UE 2 through the data channel #3, and carries the application X to the HTTP response message, that is, carries the installation package of the application X.

Correspondingly, the UE 2 receives the HTTP response message from the DCSF 1, and obtains the installation package of the application X from the HTTP response message.

S517: The UE 2 runs the application X.

For example, if the UE 2 successfully obtains the application X, the UE 2 runs the application X. For example, the UE 2 displays, in a web browser, an HTML page corresponding to the application X and executes a JavaScript script in the HTML page.

S518: The UE 2 sends a SIP response message to the UE 1. Correspondingly, the UE 1 receives the SIP response message from the UE 2.

For example, if the UE 2 determines, based on the SDP Offer information, to agree with the UE 1 to establish the corresponding application data channel (for example, the UE 2 supports a part or all of media resource information provided in the SDP Offer information), and the UE 2 successfully obtains the application X and runs the application X (that is, S515 to S517 are successfully performed), the UE 2 sends the SIP response message to the UE 1 in response to the re-INVITE request message. In this case, the SIP response message may be a 200 OK response message.

The SIP response message includes SDP Answer information determined by the UE 1 based on the SDP Offer information, and the SDP Answer information includes media resource information of an application data channel supported (or willing to be used) by the UE 2 in the media resource information provided by the SDP Offer information.

Optionally, in S519, the UE 1 sends an ACK message to the UE 2. Correspondingly, the UE 2 receives the ACK message from the UE 1.

For example, after receiving the SIP response message from the UE 2, the UE 1 determines, based on information carried in the SIP response message, that the negotiation for the media resource information succeeds and the UE 2 successfully obtains the application X. For example, when the SIP response message carries the SDP Answer information, and the IP address and/or the port information that are/is carried in the SDP Answer information and that are/is for the UE 2 to interconnect with the application data channel with the stream ID 1000 are/is not 0, the UE 1 determines that the negotiation for the media resource information succeeds and the UE 2 successfully obtains the application X. Alternatively, the UE 1 determines, based on other explicit indication information carried in the SIP response message, that the negotiation for the media resource information succeeds and the UE 2 successfully obtains the application X.

In this case, the UE 1 returns the ACK message to the UE 2, to indicate that the message is successfully received.

It may be understood that, if the UE 1 negotiates for the media resource information with the UE 2 via the UPDATE procedure (that is, the UE 1 sends the UPDATE request message in S510), the UE 1 may not perform S519.

S520: The UE 1 and the UE 2 establish the application data channel with the stream ID 1000.

For example, the UE 1 and the UE 2 establish a DTLS association (DTLS Association) and an SCTP association (SCTP Association) based on the media resource information determined through the negotiation, and the stream ID 1000 is allocated to the applications X. Therefore, the application data channel with the stream ID 1000 required by the applications X is established.

S521: Additional communication information is transmitted between the application X on the UE 1 and the application X on the UE 2 through the application data channel with the stream ID 1000.

It may be understood that, in the procedure shown in FIG. 5A to FIG. 5C, the calling user equipment (that is, the UE 1) determines to start the application X to trigger a subsequent procedure. In another possible example, called user equipment may determine to start an application Y (for example, the application Y may be any DC application in a DC application list available to the called user equipment on the terminating IMS network) to trigger the procedure. In other words, the procedure shown in FIG. 5A to FIG. 5C may also be applicable to a scenario in which "the UE 1 is the called user equipment, the UE 2 is the calling user equipment, the IMS core 1, the IMS AS 1, and the DCS 1 are network elements in the terminating IMS network, and the IMS core 2, the IMS AS 2, and the DCS 2 are network elements in the originating IMS network".

In addition, if the UE 1 and the UE 2 belong to a same IMS network, the interaction between the network element in the originating IMS network and the network element in the terminating IMS network may not need to be performed.

The foregoing procedure describes a data channel between the UE 1 and the UE 2. In the current standards, an IMS data network is a PS data off exempt data network, and a PS network serves as a transmission network between a terminal device and an IMS network. From the perspective of the PS network, the IMS network is a service network, and because the IMS data network is a PS data off exempt data network, the PS network does not intercept uplink traffic packets destined for the IMS network regardless of whether the data on/off state of the terminal device is on or off.

However, traffic types of different DC applications may vary depending on commercial requirements. For example, traffic types of some DC applications may be configured as a PS data off exempt type, and traffic types of some DC applications may be configured as a non-PS-data-off-exempt type. Therefore, how to manage and control obtaining or use of the DC applications still needs to be further studied.

Based on this, embodiments of this application provide a communication method, to manage and control, by a DC control network element based on a traffic type of a data channel application and a data on/off state of a communication device, obtaining or use of the DC application.

For example, the communication method in embodiments of this application relates to one or more communication devices (for example, a first communication device and a second communication device) and one or more network elements (for example, an IMS application server, an IMS communication control network element, and a DC control network element) in an IMS network to which the first communication device belongs. The communication device may be the terminal device described above. For example, the first communication device may be the UE 1 described above, and the second communication device may be the UE 2 described above.

The first communication device and the second communication device may belong to different IMS networks, or may belong to a same IMS network. For example, if the first communication device and the second communication device belong to different IMS networks, when the first communication device is calling user equipment and the second communication device is called user equipment, the IMS network to which the first communication device belongs is an originating IMS network, and the IMS network to which the second communication device belongs is a terminating IMS network; or when the first communication device is called user equipment and the second communication device is calling user equipment, the IMS network to which the second communication device belongs is an originating IMS network, and the IMS network to which the first communication device belongs is a terminating IMS network.

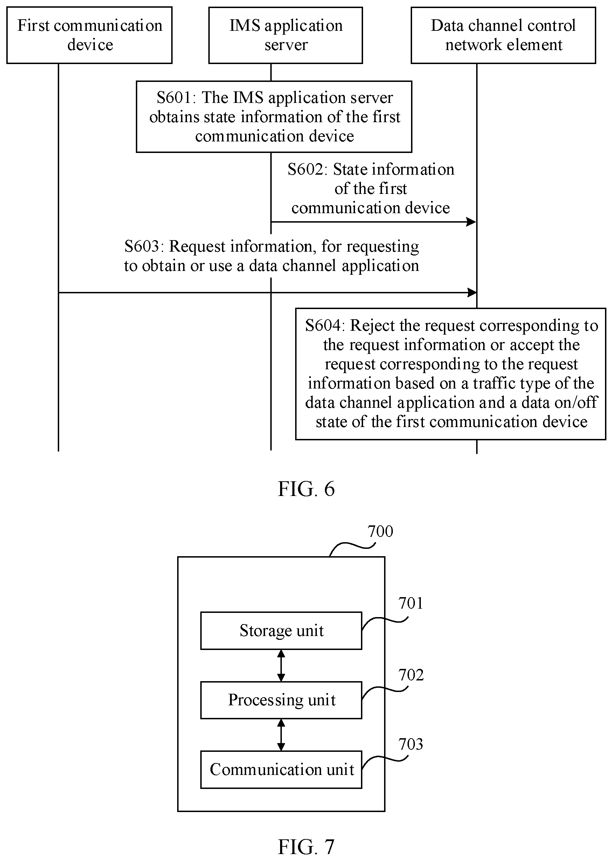

FIG. 6 is a schematic flowchart corresponding to a communication method according to an embodiment of this application. As shown in FIG. 6, the method includes the following steps.

S601: An IMS application server obtains state information of a first communication device.

In this case, the state information of the first communication device indicates a data on/off state of the first communication device, and the data on/off state is on or off. For example, the state information of the first communication device is a PS Data Off tag of the first communication device.

There are a plurality of manners for the IMS application server to obtain the state information of the first communication device. In a possible manner, in a process of registration or re-registration, the first communication device may send the state information (for example, the PS Data Off tag) of the first communication device to the IMS application server. For example, the first communication device may send the PS Data Off tag to an S-CSCF via a registration request message or a re-registration request message, so that the S-CSCF may send the PS Data Off tag to the IMS application server based on a third-party registration procedure defined in a protocol (for example, TS 24.229), and the IMS application server may store the PS Data Off tag. Each time the first communication device modifies the PS Data Off tag, a re-registration procedure may be triggered, and a modified PS Data Off tag has been sent to the IMS application server.

S602: The IMS application server sends the state information of the first communication device to a data channel control network element. Correspondingly, the data channel control network element receives the state information of the first communication device, and stores the state information of the first communication device, to subsequently accept or reject, based on the state information of the first communication device, a request corresponding to request information sent by the first communication device.

For example, the IMS application server receives a SIP message from an IMS communication control network element, and sends the state information of the first communication device to the data channel control network element based on the SIP message. In other words, after receiving the SIP message, the IMS application server may send the state information of the first communication device to the data channel control network element.

The SIP message is for managing a communication session between the first communication device and a second communication device, and the communication session is associated with a data channel. The SIP message may be a plurality of possible SIP messages. For example, the SIP message may be one or more of the following: a SIP INVITE request message, a SIP INVITE response message, a SIP re-INVITE request message, a SIP re-INVITE response message, a SIP UPDATE request message, a SIP UPDATE response message, a SIP BYE (SIP BYE) message, a SIP NOTIFY (SIP NOTIFY) message, a SIP REGISTER (SIP REGISTER) message, a SIP SUBSCRIBE (SIP SUBSCRIBE) message, a SIP PUBLISH (SIP PUBLISH) message, a SIP CANCEL (SIP CANCEL) message, and a SIP MESSAGE (SIP MESSAGE).

As described above, when receiving a specific SIP message, the IMS application server may send a session event reporting message to the data channel control network element, where the session event reporting message is for reporting an event of a communication session between the first communication device and the second communication device. For example, when receiving a SIP INVITE request message from the IMS communication control network element, the IMS application server sends a session event reporting message to the data channel control network element, where the session event reporting message is for reporting, to the data channel control network element, that the IMS AS receives the SIP INVITE request message. Therefore, in a possible implementation, the IMS application server may send the state information of the first communication device to the data channel control network element based on the session event reporting message, that is, the session event reporting message includes the state information of the first communication device.

It may be understood that the IMS application server may also send the state information of the first communication device to the data channel control network element based on another possible message. This is not limited in this embodiment of this application.

S603: The first communication device sends the request information to the data channel control network element; and correspondingly, the data channel control network element receives the request information from the first communication device.

For example, the request information is for requesting to obtain a data channel application, that is, requesting to download a data channel application, or requesting an installation package of a data channel application. For example, after the communication session between the first communication device and the second communication device is successfully established, a bootstrap data channel may be established between the first communication device and the data channel control network element, and then the first communication device may send the request information to the data channel control network element through the bootstrap data channel, to request to download the data channel application. For example, the request information is an HTTP GET request message. For specific implementation, refer to S507 in FIG. 5A to FIG. 5C.

Alternatively, the request information is for requesting to use a data channel application, and using the data channel application may include establishing an application data channel corresponding to the data channel application. For example, the first communication device pre-caches the data channel application. In this case, the first communication device is not required to request to obtain the data channel application, but directly request to establish the application data channel corresponding to the data channel application. For example, after determining to run the data channel application, the first communication device sends request information to the data channel control network element, to request to establish the application data channel corresponding to the data channel application. The first communication device may send the request information to the data channel control network element through transit communication. For example, the first communication device may send a re-INVITE request message/UPDATE request message to the IMS application server, where the re-INVITE request message/UPDATE request message includes media resource information of an application data channel supported by the first communication device, so that after receiving the re-INVITE request message/UPDATE request message, the IMS application server may send request information to the data channel control network element, where the request information is for requesting to establish an application data channel corresponding to the data channel application, and the request information includes the media resource information of the application data channel supported by the first communication device. For specific implementation, refer to S509 to S511 in FIG. 5A to FIG. 5C.

It may be understood that the foregoing are two examples of the request information. This is not limited in this embodiment of this application.

S604: The data channel control network element rejects the request corresponding to the request information or accept the request corresponding to the request information based on a traffic type of the data channel application and a data on/off state of the first communication device.

In this case, there are a plurality of manners for the data channel control network element to determine the type of the data channel application. In a possible implementation, the data channel control network element obtains a PS data off exempt application whitelist, where the PS data off exempt application whitelist includes a plurality of application identifiers, and each application identifier identifies a data channel application identified by a network side as a PS data off exempt type; and determines, based on the PS data off exempt application whitelist including an identifier of the data channel application, that the traffic type of the data channel application is the PS data off exempt type; or determines, based on the PS data off exempt application whitelist not including an identifier of the data channel application, that the traffic type of the data channel application is a non-PS-data-off-exempt type. For example, the data channel control network element is a DCSF network element, the PS data off exempt application whitelist is stored in a DCAR network element, and the DCSF network element obtains the PS data off exempt application whitelist from the DCAR network element. Alternatively, the data channel control network element is a DCSF network element, and the PS data off exempt application whitelist is stored in the DCSF network element.

In a possible implementation, the data channel control network element determines that the traffic type of the data channel application is the non-PS-data-off-exempt type, and the data on/off state of the first communication device is off, and rejects the request corresponding to the request information of the data channel application. Alternatively, the data channel control network element determines that the traffic type of the data channel application is the PS data off exempt type, and the data on/off state of the first communication device is off, and accepts the request corresponding to the request information of the data channel application. In addition, optionally, when the data on/off state of the first communication device is on, regardless of whether the traffic type of the data channel application is the non-PS-data-off-exempt type or the PS data off exempt type, the data channel control network element may accept the request corresponding to the request information of the data channel application.
(1) The request information is for requesting to obtain the data channel application. As described in S603, the request information may be an HTTP GET request message. If the data channel control network element rejects the request corresponding to the request information, the data channel control network element sends first response information to the first communication device (for example, sends the first response information to the first communication device through the bootstrap data channel between the first communication device and the data channel control network element, where the first response information is an HTTP response message), where the first response information indicates that the request corresponding to the request information is rejected. The first response information includes reason information, and the reason information indicates that a reason for the rejection is that the traffic type of the data channel application is the non-PS-data-off-exempt type. Optionally, the reason information further indicates that the reason for the rejection is that the traffic type of the data channel application is inconsistent with the data on/off state of the first communication device.

If the data channel control network element accepts the request corresponding to the request information, the data channel control network element sends second response information to the first communication device (for example, sends the second response information to the first communication device through the bootstrap data channel between the first communication device and the data channel control network element, where the second response information is an HTTP response message), where the second response information indicates that the request corresponding to the request information is accepted. The second response information includes the installation package of the data channel application.

(2) The request information is for requesting to use the data channel application. As described in S603, the request information includes the media resource information of the application data channel supported by the first communication device. If the data channel control network element rejects the request corresponding to the request information, the data channel control network element sends first response information to the IMS application server, where the first response information indicates that the request corresponding to the request information is rejected. For example, the first response information indicates the IMS application server to set port information of the application data channel supported by the first communication device to 0. The first response information includes reason information, and the reason information indicates that a reason for the rejection is that the traffic type of the data channel application is the non-PS-data-off-exempt type. Optionally, the reason information further indicates that the reason for the rejection is that the traffic type of the data channel application is inconsistent with the data on/off state of the first communication device. Subsequently, the reason information may be sent to the first communication device based on a SIP response message. Optionally, the SIP response message includes indication information indicating that the application data channel fails to be established. For example, port information of the application data channel in the SIP response message is 0, to indicate that the application data channel fails to be established. For example, after the IMS application server receives the first response information, if it is determined that interaction with a peer IMS network is required (for example, in S510, in addition to requesting to establish the application data channel between the first communication device and the second communication device, the re-INVITE request message/UPDATE request message received by the IMS application server further requests to establish another channel between the first communication device and the second communication device), after receiving the first response information, the IMS application server may continue to perform a subsequent procedure, and after completing the subsequent procedure, send the reason information to the first communication device based on the SIP response message. The SIP response message may be a response message to the re-INVITE request message/UPDATE request message received by the IMS application server in S510.

If the data channel control network element accepts the request corresponding to the request information, the data channel control network element sends second response information to the IMS application server, where the second response information indicates that the request corresponding to the request information is accepted. For example, the second response information includes media resource information for establishing an application data channel corresponding to the data channel application. For details, refer to the descriptions in FIG. 5A to FIG. 5C. After receiving the second response information, the IMS application server may perform the subsequent procedure. For details, refer to the conventional technology.

It may be understood that the procedure shown in FIG. 6 is an example in which the IMS application server sends the state information of the first communication device to the data channel control network element. In another embodiment, the data channel control network element may alternatively obtain the state information of the first communication device in another manner. This is not limited in this embodiment of this application.

In this embodiment of this application, the DC application is managed by the data channel control network element. Because the data channel control network element communicates with another network element based on a service-based interface, that is, the data channel control network element does not receive the SIP message for managing the communication session, and the UE communicates with a network element in the IMS network based on the SIP message, the data channel control network element cannot obtain state information of the UE (indicating that a data on/off state of the UE is on or off) from the UE. As a result, the data channel control network element cannot manage and control obtaining or use of the DC application based on the state information of the UE and the traffic type (that is, the PS data off exempt type or the non-PS-data-off-exempt type) of the DC application. According to the method provided in this embodiment of this application, the IMS application server may send the state information of the first communication device to the data channel control network element, so that the data channel control network element can manage and control obtaining or use of the DC application based on the data on/off state of the first communication device and the traffic type of the DC application, thereby conserving bandwidth resources of an operator network.

The foregoing mainly describes the solutions provided in embodiments of this application from a perspective of interaction between network elements. It may be understood that, to implement the foregoing functions, the network elements may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional unit division may be performed on the IMS application server and the DC control network element based on the foregoing method examples. For example, each functional unit may be obtained through division corresponding to each function, or two or more functions may be integrated into one unit. The integrated unit may be implemented in a form of hardware, or may be implemented in a form of a software functional unit.

When the integrated unit is used, FIG. 7 is a block diagram of a possible example of an apparatus according to an embodiment of this application. As shown in FIG. 7, the apparatus 700 may include a processing unit 702 and a communication unit 703. The processing unit 702 is configured to control and manage actions of the apparatus 700. The communication unit 703 is configured to support the apparatus 700 in communicating with another device. Optionally, the communication unit 703 is also referred to as a transceiver unit, and may include a receiving unit and/or a sending unit, respectively configured to perform a receiving operation and a sending operation. The apparatus 700 may further include a storage unit 701, configured to store program code and/or data of the apparatus 700.
(1) The apparatus 700 may be the data channel control network element in the foregoing embodiments, or may be a component (for example, a circuit or a chip) disposed in the data channel control network element. The processing unit 702 may support the apparatus 700 in performing actions of the data channel control network element in the foregoing method examples. Alternatively, the processing unit 702 mainly performs an internal action of the data channel control network element in the method examples, and the communication unit 703 may support communication between the apparatus 700 and another device.

For example, in an embodiment, the communication unit 703 is configured to receive request information from a first communication device, where the request information is for requesting to obtain a data channel application or requesting to use the data channel application; and the processing unit 702 is configured to: reject the request corresponding to the request information or accept the request corresponding to the request information based on a traffic type of the data channel application and a data on/off state of the first communication device, where the traffic type is a PS data off exempt type or a non-PS-data-off-exempt type, and the data on/off state is on or off.

In a possible design, the processing unit 702 is specifically configured to: determine that the traffic type is the non-PS-data-off-exempt type and the data on/off state is off; and send first response information, where the first response information indicates that the request corresponding to the request information is rejected.

In a possible design, the processing unit 702 is specifically configured to: determine that the traffic type is the PS data off exempt type and the data on/off state is off; and send second response information, where the second response information indicates that the request corresponding to the request information is accepted.

In a possible design, the first response information includes reason information, and the reason information indicates that a reason for the rejection is that the traffic type of the data channel application is the non-PS-data-off-exempt type.

In a possible design, the request information is for requesting to obtain the data channel application, and the second response information includes an installation package of the data channel application; or the request information is for requesting to use the data channel application, and the second response information includes media resource information for establishing an application data channel corresponding to the data channel application.

In a possible design, the communication unit 703 is further configured to receive state information from an internet protocol multimedia subsystem IMS application server, where the state information indicates the data on/off state.

In a possible design, the communication unit 703 is further configured to receive a session event reporting message from the IMS application server, where the session event reporting message includes the state information.

In a possible design, the state information includes a packet switched data off tag.

In a possible design, the processing unit 702 is further configured to: obtain a PS data off exempt application whitelist, where the PS data off exempt application whitelist includes a plurality of application identifiers, and each application identifier identifies a data channel application identified by a network side as the PS data off exempt type; and determine, based on the PS data off exempt application whitelist including an identifier of the data channel application, that the traffic type of the data channel application is the PS data off exempt type; or determine, based on the PS data off exempt application whitelist not including an identifier of the data channel application, that the traffic type of the data channel application is the non-PS-data-off-exempt type.

In a possible design, the first communication device is calling user equipment, and the data channel control network element is a network element in an originating IMS network; or the first communication device is called user equipment, and the data channel control network element is a network element in a terminating IMS network.

(2) The apparatus 700 may be the IMS application server in the foregoing embodiments, or may be a component (for example, a circuit or a chip) disposed in the IMS application server. The processing unit 702 may support the apparatus 700 in performing actions of the IMS application server in the foregoing method examples. Alternatively, the processing unit 702 mainly performs an internal action of the IMS application server in the method example, and the communication unit 703 may support communication between the apparatus 700 and another device.

For example, in an embodiment, the processing unit 702 is configured to obtain state information of a first communication device, where the state information indicates a data on/off state of the first communication device, and the data on/off state is on or off; and the communication unit 703 is configured to send the state information to a data channel control network element, where the state information is for accepting or rejecting a request corresponding to request information sent by the first communication device, and the request information is for requesting to obtain a data channel application or requesting to use the data channel application.

In a possible design, the communication unit 703 is further configured to: receive a registration request message or a re-registration request message from the first communication device, where the registration request message or the re-registration request message includes the state information.

In a possible design, the communication unit 703 is further configured to: receive a session initiation protocol SIP message from an IMS communication control network element, where the SIP message is for managing a communication session between the first communication device and a second communication device, and the communication session is associated with a data channel; and send the state information to the data channel control network element based on the SIP message.

In a possible design, the communication unit 703 is further configured to: send a session event reporting message to the data channel control network element, where the session event reporting message includes the state information.

In a possible design, the request information is for requesting to use the data channel application, and the communication unit 703 is further configured to: receive first response information from the data channel control network element, where the first response information indicates that the request corresponding to the request information is rejected, where the first response information includes reason information, and the reason information indicates that a reason for the rejection is that a traffic type of the data channel application is a non-PS-data-off-exempt type.

In a possible design, the request information is for requesting to use the data channel application, and the communication unit 703 is further configured to: receive second response information from the data channel control network element, where the second response information indicates that the request corresponding to the request information is accepted. The second response information includes media resource information for establishing an application data channel corresponding to the data channel application.

In a possible design, the first communication device is calling user equipment, the IMS application server is a network element in an originating IMS network, and the data channel control network element is a network element in the originating IMS network; or the first communication device is called user equipment, the IMS application server is a network element in a terminating IMS network, and the data channel control network element is a network element in the terminating IMS network.

It should be understood that division into the units in the apparatus is merely logical function division. In actual implementation, all or a part of the units may be integrated into one physical entity or may be physically separated. In addition, all the units in the apparatus may be implemented in a form of software invoked by a processing element, or may be implemented in a form of hardware; or a part of the units may be implemented in a form of software invoked by a processing element, and a part of the units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or a part of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

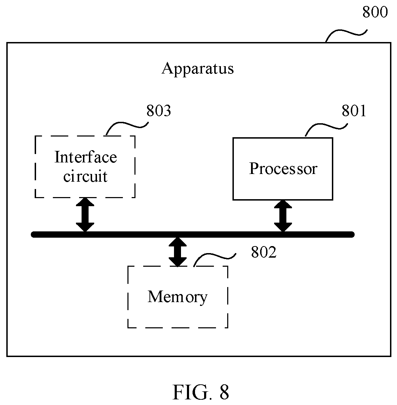

FIG. 8 is a diagram of a structure of an apparatus according to an embodiment of this application. The apparatus 800 may be the IMS AS or the DC control network element in the foregoing embodiments, and is configured to implement a function of the IMS AS or the DC control network element in the foregoing embodiments.

As shown in FIG. 8, the communication apparatus 800 may include a processor 801, a memory 802, and an interface circuit 803. The processor 801 may be configured to: process a communication protocol and communication data, and control the communication apparatus 800. The memory 802 may be configured to store a program and data. The processor 801 may perform, based on the program, the method performed by the apparatus 800 in embodiments of this application. The interface circuit 803 may be used by the apparatus 800 to communicate with another device. The communication may be wired communication or wireless communication. The interface circuit may be, for example, a service-based interface.

Alternatively, the memory 802 may be externally connected to the communication apparatus 800. In this case, the communication apparatus 800 may include the interface circuit 803 and the processor 801. Alternatively, the interface circuit 803 may be externally connected to the communication apparatus 800. In this case, the communication apparatus 800 may include the memory 802 and the processor 801. When both the interface circuit 803 and the memory 802 are externally connected to the communication apparatus 800, the communication apparatus 800 may include the processor 801.

The apparatus 800 shown in FIG. 8 can implement processes of the apparatus 800 in the foregoing method embodiments. Operations and/or functions of modules in the apparatus 800 shown in FIG. 8 are respectively intended to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method is applied to a data channel control network element, and the method comprises:
receiving request information from a first communication device, wherein the request information is for requesting to obtain a data channel application or requesting to use the data channel application; and
rejecting the request corresponding to the request information or accepting the request corresponding to the request information based on a traffic type of the data channel application and a data on/off state of the first communication device, wherein
the traffic type is a PS data off exempt type or a non-PS-data-off-exempt type, and the data on/off state is on or off.

2. The method according to claim 1, wherein rejecting the request corresponding to the request information based on the traffic type of the data channel application and the data on/off state of the first communication device comprises:
determining that the traffic type is the non-PS-data-off-exempt type and the data on/off state is off; and
sending first response information, wherein the first response information indicates that the request corresponding to the request information is rejected.

3. The method according to claim 1, wherein accepting the request corresponding to the request information based on the traffic type of the data channel application and the data on/off state of the first communication device comprises:
determining that the traffic type is the PS data off exempt type and the data on/off state is off; and
sending second response information, wherein the second response information indicates that the request corresponding to the request information is accepted.

4. The method according to claim 2, wherein the first response information comprises reason information, and the reason information indicates that a reason for the rejection is that the traffic type of the data channel application is the non-PS-data-off-exempt type.

5. The method according to claim 3, wherein
the request information is for requesting to obtain the data channel application, and the second response information comprises an installation package of the data channel application; or
the request information is for requesting to use the data channel application, and the second response information comprises media resource information for establishing an application data channel corresponding to the data channel application.

6. The method according to any one of claims 1 to 5, wherein the method further comprises:
receiving state information from an internet protocol multimedia subsystem IMS application server, wherein the state information indicates the data on/off state.

7. The method according to claim 6, wherein receiving the state information from the IMS application server comprises:
receiving a session event reporting message from the IMS application server, wherein the session event reporting message comprises the state information.

8. The method according to claim 6 or 7, wherein the state information comprises a packet switched data off tag.

9. The method according to any one of claims 1 to 8, wherein the method further comprises:
obtaining a PS data off exempt application whitelist, wherein the PS data off exempt application whitelist comprises a plurality of application identifiers, and each application identifier identifies a data channel application identified by a network side as the PS data off exempt type; and
determining, based on the PS data off exempt application whitelist comprising an identifier of the data channel application, that the traffic type of the data channel application is the PS data off exempt type; or determining, based on the PS data off exempt application whitelist not comprising an identifier of the data channel application, that the traffic type of the data channel application is the non-PS-data-off-exempt type.

10. The method according to any one of claims 1 to 9, wherein
the first communication device is calling user equipment, and the data channel control network element is a network element in an originating IMS network; or
the first communication device is called user equipment, and the data channel control network element is a network element in a terminating IMS network.

11. A communication method, wherein the method is applied to an IMS application server, and the method comprises:
obtaining state information of a first communication device, wherein the state information indicates a data on/off state of the first communication device, and the data on/off state is on or off; and
sending the state information to a data channel control network element, wherein the state information is for accepting or rejecting a request corresponding to request information sent by the first communication device, and the request information is for requesting to obtain a data channel application or requesting to use the data channel application.

12. The method according to claim 11, wherein obtaining the state information of the first communication device comprises:
receiving a registration request message or a re-registration request message from the first communication device, wherein the registration request message or the re-registration request message comprises the state information.

13. The method according to claim 11 or 12, wherein sending the state information to the data channel control network element comprises:
receiving a session initiation protocol SIP message from an IMS communication control network element, wherein the SIP message is for managing a communication session between the first communication device and a second communication device, and the communication session is associated with a data channel; and
sending the state information to the data channel control network element based on the SIP message.

14. The method according to any one of claims 11 to 13, wherein sending the state information to the data channel control network element comprises:
sending a session event reporting message to the data channel control network element, wherein the session event reporting message comprises the state information.

15. The method according to any one of claims 11 to 14, wherein the request information is for requesting to use the data channel application, and the method further comprises:
receiving first response information from the data channel control network element, wherein the first response information indicates that the request corresponding to the request information is rejected, wherein
the first response information comprises reason information, and the reason information indicates that a reason for the rejection is that a traffic type of the data channel application is a non-PS-data-off-exempt type.

16. The method according to any one of claims 11 to 14, wherein the request information is for requesting to use the data channel application, and the method further comprises:
receiving second response information from the data channel control network element, wherein the second response information indicates that the request corresponding to the request information is accepted, wherein
the second response information comprises media resource information for establishing an application data channel corresponding to the data channel application.

17. The method according to any one of claims 11 to 16, wherein the first communication device is calling user equipment, the IMS application server is a network element in an originating IMS network, and the data channel control network element is a network element in the originating IMS network; or
the first communication device is called user equipment, the IMS application server is a network element in a terminating IMS network, and the data channel control network element is a network element in the terminating IMS network.

18. A communication method, wherein the method comprises:
obtaining, by an IMS application server, state information of a first communication device, wherein the state information indicates a data on/off state of the first communication device, and the data on/off state is on or off;
sending, by the IMS application server, the state information to a data channel control network element, wherein the data channel control network element receives the state information;
receiving, by the data channel control network element, request information from the first communication device, wherein the request information is for requesting to obtain a data channel application or requesting to use the data channel application; and
rejecting, by the data channel control network element, the request corresponding to the request information or accepting the request corresponding to the request information based on a traffic type of the data channel application and the data on/off state, wherein
the traffic type is a PS data off exempt type or a non-PS-data-off-exempt type.

19. A communication apparatus, comprising a processor, wherein the processor is coupled to a memory, the memory stores a computer program, and the processor is configured to invoke the computer program in the memory, to perform the method according to any one of claims 1 to 10.

20. A communication apparatus, comprising a processor, wherein the processor is coupled to a memory, the memory stores a computer program, and the processor is configured to invoke the computer program in the memory, to perform the method according to any one of claims 11 to 17.

21. A communication system, wherein the communication system comprises the apparatus according to claim 19 and the apparatus according to claim 20.

22. A computer-readable storage medium, wherein the storage medium stores a computer program or instructions, and when the computer program or the instructions are executed by a computer, the method according to any one of claims 1 to 10, the method according to any one of claims 11 to 17, or the method according to claim 18 is performed.

23. A computer program product, wherein when a computer reads and executes the computer program product, the method according to any one of claims 1 to 10, the method according to any one of claims 11 to 17, or the method according to claim 18 is performed.
